(19) Europäisches Patentamt
European Patent Office
Office européen des brevets

(11) **EP 4 675 385 A1**

(12) **EUROPEAN PATENT APPLICATION**
published in accordance with Art. 153(4) EPC

(43) Date of publication:
**07.01.2026 Bulletin 2026/02**

(21) Application number: 23925971.6

(22) Date of filing: **27.09.2023**

(51) International Patent Classification (IPC):
**G05D 1/00** (2024.01)

(52) Cooperative Patent Classification (CPC):
**G05D 1/661; G05D 1/00; G05D 1/247;**
G05D 2105/15; G05D 2107/23; G05D 2109/10;
G05D 2111/36

(86) International application number:
**PCT/CN2023/122116**

(87) International publication number:
**WO 2024/183269 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 03.03.2023  CN 202310198947
03.03.2023  CN 202310248721

(71) Applicant: **Shenzhen LDrobot Co., Ltd.**
**Shenzhen, Guangdong 518000 (CN)**

(72) Inventors:
• **LI, Shaohai**
  **Shenzhen, Guangdong 518000 (CN)**
• **LI, Ang**
  **Shenzhen, Guangdong 518000 (CN)**
• **GUO, Gaihua**
  **Shenzhen, Guangdong 518000 (CN)**
• **ZHOU, Wei**
  **Shenzhen, Guangdong 518000 (CN)**

(74) Representative: **Curell Suñol S.L.P.**
**Muntaner 240, 4o 2a**
**08021 Barcelona (ES)**

(54) **ROBOT CONTROL METHOD AND APPARATUS, AND ROBOT**

(57)    A robot control method and apparatus, and a robot. The robot control method comprises: when it is determined that a robot meets a first preset condition, controlling the robot to move to a positioning guide line (S102), wherein the first preset condition comprises: the robot being unable to move along a preset first path, position information of the robot being lost, or an instruction for controlling a robot, which does not have a positioning function, to approach a specified position being received; acquiring a first position of the robot on the positioning guide line, and generating a second path from the first position to a destination position (S104); and controlling, on the basis of the second path, the robot to move to the destination position (S106). A robot is controlled to approach a positioning guide line, an accurate position of the robot on the positioning guide line is determined, and a path for the robot to approach a destination position is then determined according to the accurate position of the robot on the positioning guide line, such that regardless of conditions, the robot can generate a path to the destination position according to the positioning guide line.

Control a robot to move to a positioning wire when it is determined that the robot satisfies a first preset condition — S102

↓

Acquire a first location of the robot on the positioning wire, generate a pathfinding path from the first location to a destination location — S104

↓

Control the robot to move to the destination location based on the pathfinding path — S106

FIG. 1

# Description

## CROSS-REFERENCE TO RELATED APPLICATIONS

The present disclosure is filed on the basis of Chinese patent application No. 2023101989477, entitled "Robot Recharging Method, Apparatus, and System", filed March 3, 2023, and claims priority to the Chinese patent application, the entire contents of which are incorporated herein by reference.

The present disclosure is filed on the basis of Chinese patent application No. 2023102487213, entitled "Breakpoint Resumption Control Method for a Lawn Mower, Apparatus, Device, and Storage Medium", filed March 3, 2023, and claims priority to the Chinese patent application, the entire contents of which are incorporated herein by reference.

## TECHNICAL FIELD

The present disclosure relates to the technical field of robot control, and specifically to a robot control method and apparatus, and a robot.

## BACKGROUND

The description here merely provides background information related to the present disclosure and does not necessarily constitute the prior art.

When a robot is working, the current location of the robot needs to be known in order to monitor the working status of the robot or assign a task to the robot. However, in some cases, the robot may fail to follow a predetermined path during working due to presence of an obstacle on the predetermined path, or the robot cannot obtain its accurate location due to the impact of the working environment, or the robot does not have a positioning function. In such cases, it is necessary to accurately determine the current location of the robot and then re-plan a path for the robot to move to a predetermined working location, enabling the robot to improve the efficiency of completing the task.

## SUMMARY

### Technical Problem

An objective of embodiments of the present disclosure is to provide a robot control method and apparatus, and a robot.

### Technical Scheme

The following technical schemes are adopted in embodiments of the present disclosure.

In accordance with a first aspect of the present disclosure, an embodiment provides a robot control method, including:

controlling a robot to move to a positioning wire in response to determining that the robot satisfies a first preset condition,

where the first preset condition includes:

the robot is unable to move along a first preset path;

location information of the robot is missing; or

an instruction of controlling the robot not having a positioning function to move to a specified location is received; and

acquiring a first location of the robot on the positioning wire, and generating a second path from the first location to a destination location; and controlling the robot to move to the destination location based on the second path.

In accordance with a second aspect of the present disclosure, an embodiment provides a robot control apparatus, including:

a positioning wire search unit configured for controlling a robot to move to a positioning wire in response to determining that the robot satisfies a first preset condition,

where the first preset condition includes:

the robot is unable to move along a first preset path;

location information of the robot is missing; or

an instruction of controlling the robot not having a positioning function to move to a specified location is received; and

a task control unit configured for acquiring a first location of the robot on the positioning wire, generating a second path from the first location to a destination location; and controlling the robot to move to the destination location based on the second path.

In accordance with a third aspect of the present disclosure, an embodiment provides a robot control system, including:

a memory, configured for storing a computer program; and

a processor, configured for executing the computer program, where the computer program, when executed by the processor, causes the processor to implement the robot control method described above.

The robot control method provided by the embodiments of present disclosure has the following beneficial effects. The robot is controlled to move to the positioning wire, an accurate location of the robot on the positioning wire is determined, and then a path for the robot to move to the destination location is determined according to the accurate location of the robot on the positioning wire.

**BRIEF DESCRIPTION OF DRAWINGS**

To describe the technical schemes of the embodiments of the present disclosure more clearly, the following briefly introduces the accompanying drawings required for describing the embodiments or example technologies. Apparently, the accompanying drawings in the following description show only some embodiments of the present disclosure, and those having ordinary skills in the art may still derive other drawings from these accompanying drawings without creative efforts.

FIG. 1 is a schematic flowchart of a robot control method according to an embodiment of the present disclosure;

FIG. 2 is a schematic diagram of a scenario of movement from a pathfinding location to a positioning wire in a robot control method according to an embodiment of the present disclosure;

FIG. 3 is a schematic diagram illustrating the principle of positioning a robot based on a positioning wire according to an embodiment of the present disclosure;

FIG. 4 is a schematic diagram of waveforms of positioning a robot based on a positioning wire according to an embodiment of the present disclosure;

FIG. 5 is a schematic diagram of generating a first recharging path according to an embodiment of the present disclosure;

FIG. 6 is a schematic diagram of generating a second recharging path according to an embodiment of the present disclosure;

FIG. 7 is a schematic diagram of generating a third recharging path according to an embodiment of the present disclosure;

FIG. 8 is a schematic diagram of generating a fourth recharging path according to an embodiment of the present disclosure;

FIG. 9 is a schematic diagram of a positioning wire according to an embodiment of the present disclosure;

FIG. 10 is a schematic diagram of determining a fifth recharging path using a first wire and a second wire according to an embodiment of the present disclosure;

FIG. 11 is a schematic diagram of determining a sixth recharging path using a second wire according to an embodiment of the present disclosure;

FIG. 12 is a schematic diagram of determining a seventh recharging path using a second wire according to an embodiment of the present disclosure;

FIG. 13 is a schematic diagram of determining an eighth recharging path using a second wire according to an embodiment of the present disclosure;

FIG. 14 is a schematic diagram of determining a ninth recharging path using a third wire according to an embodiment of the present disclosure;

FIG. 15 is a schematic flowchart of a robot control method from a charging station to a pathfinding location according to an embodiment of the present disclosure;

FIG. 16 is a schematic diagram of generating a first work resumption path according to an embodiment of the present disclosure;

FIG. 17 is a schematic diagram of generating a second work resumption path according to an embodiment of the present disclosure;

FIG. 18 is a schematic diagram of generating a third work resumption path according to an embodiment of the present disclosure;

FIG. 19 is a schematic diagram of generating a fourth work resumption path according to an embodiment of the present disclosure;

FIG. 20 is a schematic diagram of generating a fifth work resumption path according to an embodiment of the present disclosure;

FIG. 21 is a schematic flowchart of a robot control method of controlling a robot to move from a pathfinding location to a determined position on a positioning wire and then return to the pathfinding location according to an embodiment of the present disclosure;

FIG. 22 is a schematic structural diagram of a robot control apparatus according to an embodiment of the present disclosure; and

FIG. 23 is a schematic diagram of a robot control system according to an embodiment of the present disclosure.

## DETAILED DESCRIPTION

To make the objectives, technical schemes, and advantages of the present disclosure clearer, the present disclosure is described in further detail with reference to accompanying drawings and embodiments. It should be understood that the embodiments described herein are merely used to illustrate the present disclosure but are not to limit the present disclosure.

It should be noted that the terms such as "first," "second" and the like are used merely for ease of description, and shall not be construed as indicating or implying relative importance or implying the number of technical features. The term "plurality of" means two or more, unless otherwise explicitly specified.

To illustrate the technical schemes provided by the present disclosure, a detailed description is given below in conjunction with the accompanying drawings and embodiments.

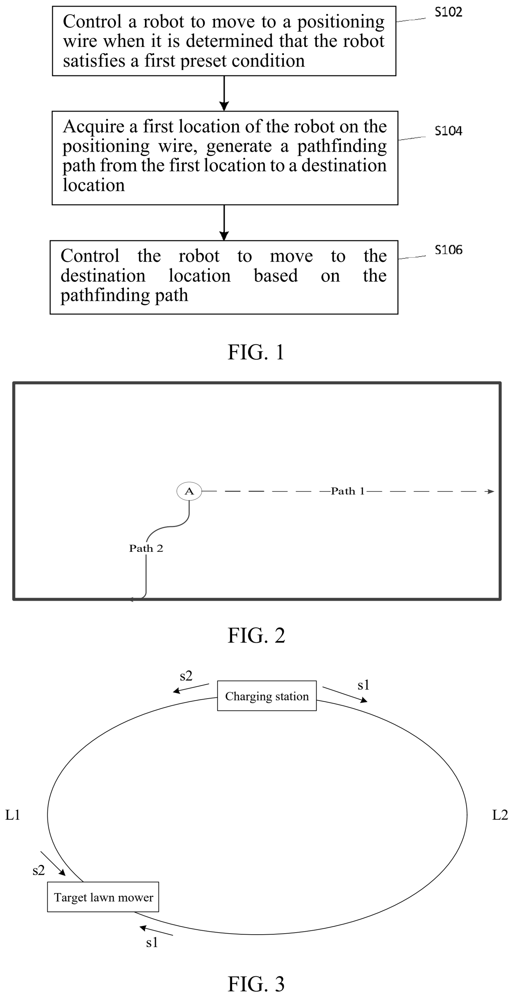

FIG. 1 is a schematic flowchart of a robot control method according to some embodiments of the present disclosure. As shown in FIG. 1, the robot control method includes the following steps S102 to S106.

At S102, a robot is controlled to move to a positioning wire when it is determined that the robot satisfies a first preset condition.

The first preset condition includes: the robot is unable to move along a first preset path;

location information of the robot is missing; or

an instruction of controlling the robot not having a positioning function to move to a specified location is received, or

a recharge instruction is received.

At S104, a first location of the robot on the positioning wire is acquired, and a pathfinding path from the first location to a destination location is generated.

At S106, the robot is controlled to move to the destination location based on the pathfinding path.

First, the robot, the positioning wire, and the destination location in this embodiment are described. These descriptions are merely for convenience of understanding of the schemes, and are not intended to limit the structures of the apparatus and device for implementing the robot control method provided in the embodiments of the present disclosure.

The robot in the present disclosure may be a robot that determines a location of the robot through a positioning base station, or may be a robot that does not have a positioning function and completes work by traversing a preset area. The positioning base station may be a charging station or an independent communication base station provided for positioning. The robot includes a driving device, a detection device, and a control device. Under the control of the control device, a body of the robot is driven by the driving device to complete work in a specified working area. The detection device is configured for detecting a working environment in the specified working area, providing positioning information of the robot in the specified working area, providing an external reference signal for sensing and assisting the robot in positioning, etc. The detection device may include a first sensor, a second sensor, and/or a third sensor. The first sensor includes a positioning coil, a global positioning system (GPS), a gyroscope, or other types of sensors, and is configured for acquiring positioning information from a positioning base station in real time and providing the positioning information to the control device of the robot to determine the location of the robot in real time. The second sensor includes a laser sensor, a vision sensor, a temperature sensor, etc., and is configured for providing information about an environment where the robot is located to the control device, so that the control device can control the driving device to prevent the robot from colliding with an obstacle or the like in the environment. The third sensor includes an electromagnetic sensor, an optical detector, a temperature sensor, a vision sensor, and the like, is arranged in cooperation with the positioning wire, and is configured for detecting the positioning wire and acquiring a location of the robot on the positioning wire after the robot moves to the positioning wire. It should be noted that the arrangement of the first sensor, the second sensor, and the third sensor are merely for describing functions and does not mean that the number of each of the three types of sensors is at least one. For example, some types of sensors may have one or more of the functions, or one of the three types of sensors may be omitted. In addition, for each of control, the control device that controls the body of the robot may further be connected to a portable terminal, which includes a mobile phone, a personal computer, a tablet computer, etc., and provides a visual control interface to a user through wireless connection. The robot control method provided in this embodiment may be directly applied to the control device of the robot, or may be applied to the portable terminal connected to the control device of the robot.

The positioning wire in the present disclosure is arranged in cooperation with the third sensor in the detection device of the robot, and is a device for assisting the robot in accurate positioning. The positioning wire may be arranged along a boundary of the working area, arranged inside the working area, or arranged outside the working area and completely surrounding the working area. To reduce the power consumption of the robot and reduce the time required for the robot to perform accurate positioning through the positioning wire, when the positioning wire is arranged along the boundary of the working area or arranged outside the working area, the positioning wire needs to be arranged as close to a boundary line of the working area as possible. The positioning wire may be laid on ground or buried under ground. For ease of implementation, the positioning wire may provide an accurate positioning signal, and the third sensor collects the precise positioning signal and sends same to the control device of the robot, thus realizing the accurate positioning of the robot. The accurate positioning system formed by the positioning wire and the third sensor allows the robot to identify the positioning wire through electromagnetic induction, photoelectric induction, temperature sensing, visual marking, etc., and obtain a positioning signal from the positioning wire, so that when the robot is not equipped with the first sensor or when the first sensor fails to acquire a signal, the accurate location of the robot can be determined, and a positioning signal measured by the first sensor of the robot can be corrected.

Depending on different working situations, the destination location in the present disclosure may include a location of a charging station, a location where the robot resumes work, or a working location of the robot specified in the working area. The destination location may be determined according to a current battery level of the robot or according to a task executed by the robot.

Before executing a task, the robot may determine a working area in one of the following manners. For example, a user may guide the robot to travel to determine a working area in which work is to be performed. Alternatively, a user may input a map of a working area into the control device of the robot to enable the robot to determine the working area. Alternatively, the robot may travel along a positioning wire laid in advance in a working area to determine the working area. Then, the user inputs a working path, or the control device of the robot generates a working path according to the shape of the working area. In addition, control parameters inputted by the user may further be received, according to which the control device of the robot configures a working process and a recharging process. The control parameters may include a velocity, a traveling direction, and the like of the robot. The control parameters may also include a condition for triggering resumption of work, a battery level threshold for triggering recharging, a basis for determining a start location of resumption of work, etc.

Based on this, in an embodiment of the present disclosure, determining that the robot satisfies the pathfinding condition in S 102 includes that the robot satisfies the following condition:

the robot is unable to move along a preset path, i.e., including a case where after the robot receives a control instruction and moves for a period of time along a preset path determined according to the control instruction, it is determined through the first sensor that the robot is not on the preset path. This case may be because the robot encounters an obstacle on the preset path, which prevents the robot from continuing to move along the preset path, or a case where when the robot determines the preset path according to the control instruction, positioning performed by the first sensor is inaccurate due to interference from the environment and the robot deviates from the preset path after traveling for a period of time. For the presence of an obstacle on the preset path, the following three cases may exist. In a first case, the preset path needs to pass through an area in the working area where work has been completed, i.e., an area that the robot has traveled through, and according to a location of an obstacle recorded during working, the robot may generate a preset path that avoids the obstacle. In a second case, the preset path needs to pass through an area in the working area where work has not been performed, and the robot may first generate a straight path from the pathfinding location to the destination location, and when encountering an obstacle in the process of traveling to the charging station along the straight path, avoid the obstacle and then return to the straight path. In a third case, location information of an obstacle in the working area (or location information of an obstacle in an area from the working area to the destination location when the destination location is outside the working area) provided by a user is received, or the robot determines location information of an obstacle in the working area through the second sensor when the robot travels along the working area in advance to determine the range of the working area.

Without the second sensor, the robot cannot determine the location of the obstacle in advance. During working, when detecting according to a real-time positioning signal collected by the first sensor that the body of the robot cannot move or moves too slowly, the robot may determine that there is an obstacle in the traveling direction, and repeatedly perform collision, backward movement, rotation, forward movement, and other operations to attempt to bypass the obstacle.

The preset path is generated after the obstacle or the area where work has been completed is avoided according to a shortest straight-line distance between the pathfinding location and the destination location. The preset path includes locations to be traveled and a forward angle at each location.

The robot is unable to move according to the preset path, i.e., the robot is controlled to travel to the destination location along the preset path, and the location and pose of the robot are monitored during traveling to determine whether the robot is on the preset path. There are many possible reasons why the robot deviates from a first recharging path. For example, the robot deviates from the first recharging path in order to avoid a movable obstacle or an obstacle that has not been previously detected, or walking wheels of the robot cannot move in a controlled direction due to slippery ground. Because information of the locations on the preset path is certain, a distance between the robot and the location on the preset path nearest to robot may be calculated according to a real-time location of the robot, so as to obtain a location offset of the robot relative to the preset path. A forward angle of the robot at the location on the preset path nearest to the robot is calculated according to the current forward angle of the robot, so as to obtain an angle offset of the robot relative to the preset path.

When the robot is able to travel along the preset path, or when the robot deviates from the preset path but the location offset and the angle offset are less than corresponding preset thresholds, or when the robot can return to the first recharging path within a preset time, it is determined that the robot is able to move according to the preset path. When the position offset of the robot relative to the preset path exceeds the corresponding preset threshold and/or the angle offset of the robot relative to the first recharging path exceeds the corresponding preset threshold, the robot cannot adjust itself to return to the preset path, or needs to make great effort in order to return to the preset path. In this case, it is determined that the robot is unable to move according to the preset path. When the robot fails to travel through the preset path within a preset time or fails to reach a specified location on the preset path within a preset time, it is also determined that the robot is unable to move according to the preset path. When it is determined that the robot is unable to move according to the preset path, it is necessary to re-plan a path to the destination location.

Positioning information of the robot is missing. For example, for a robot having a real-time positioning function, the robot needs to maintain communication with a positioning base station in order to accurately provide the current location of the robot. Due to the complex working environment of the robot, the robot may not be able to maintain stable communication. In a case of poor communication, the robot cannot acquire the accurate location of the robot, making it difficult for the robot to continue working. There are also some robots that do not have a positioning function. The location of such a robot cannot be determined during working, and consequently the work progress of the robot cannot be determined. For example, during cleaning, some robot vacuum cleaners that do not have a positioning function often fail to clean part of the floor that needs to be cleaned due to the lack of the positioning function.

The instruction of controlling the robot to move to the specified location generally includes:
a recharge instruction with the specified location being the charging station. The robot is controlled to return to the charging station, when a battery level of the robot is detected to be lower than a first threshold, a recharge control signal is received, the battery level of the robot is determined to be insufficient for the robot to complete the remaining area in the working area, and/or work in the working area is identified to be of high complexity (e.g., slippery ground, many obstacles, etc.) requiring high power consumption. A battery level warning threshold, i.e., the first threshold, may be set in advance for the robot. The first threshold may be set according to a type of the robot, or may be dynamically generated according to a currently planned mowing path. The method of determining whether the battery level of the robot reaches the first threshold may be used in combination with the method of determining the battery level of the robot is insufficient for the robot to complete the remaining area in the working area, so as to finally achieve a balance between ensuring that the robot can move from the current working location to the charging station and avoiding increasing the number of times of recharging. Specifically, the recharge control signal may be a recharge control signal of a portable device received by the control device of the robot or a recharge control signal received by the control device of the robot from an input device of the body of the robot. In addition, the battery level of the robot may be displayed on a display of the body of the robot or in a control interface of the portable device, so that the user can determine when the robot needs to travel to the charging station for charging.

An instruction with the specified location being a working location generally includes:
a work resumption instruction with the specified location being a working location. The robot is controlled to return to resume work, when the current location of the robot cannot be detected, a work resumption control signal is received, the current location of the robot deviates from a preset working location, the robot does not reach a specified working location within a preset time, and/or a collision of the robot with an obstacle is detected. Specifically, the work resumption control signal may be a work resumption control signal of a portable device received by the control device of the robot or a work resumption control signal received by the control device of the robot from an input device of the body of the robot. In addition, the current task progress of the robot may be displayed on a display of the body of the robot or in a control interface of the portable device, so that the user can determine whether to manually control the robot to continue working.

The pathfinding location may be expressed by, for example, but not limited to, geographic coordinates, and may also be expressed by a relative location relative to the wire (or other references) or a location within the working area. Location information of the pathfinding location may be determined by the control device according to a positioning signal acquired by the first sensor and a latest location determined by the third sensor upon detection of the positioning wire.

It can be understood that in one or more embodiments, a path from the pathfinding location to the destination location that is received by the robot is generally a straight path from the pathfinding location to the destination location, but in actual use, due to the limitation of the environment or hardware of the robot, the pathfinding location cannot be determined, or there is an obstacle on the straight path which makes it difficult for the robot to walk along the straight path from the pathfinding location to the destination location. Therefore, it is necessary to control the robot to move to the positioning wire first, and then move from a known location on the positioning wire to the destination location.

For the step S104, to ensure that the robot can surely move from the positioning wire to the destination location and ensure that the generated pathfinding path is executable, the location of the robot on the wire is determined after the robot moves to the positioning wire, and the pathfinding path is planned according to the location of the robot on the positioning wire.

In the robot control method provided by the embodiments of the present disclosure, when the robot cannot determine its location or cannot execute a preset path to the destination location, the robot moves to the positioning wire to determine the location of the robot, and after the location of the robot on the positioning wire is determined, a pathfinding path to the destination location is generated. Through the positioning wire, an accurate positioning function is provided for a robot not having a positioning function or a robot that is inaccurately positioned, to solve the problem of lack of positioning information of the robot during working, thereby enabling the robot to complete work more efficiently.

In a possible control method, because the pathfinding location of the robot is uncertain (for example, the robot is equipped with a GPS positioning system, but the positioning precision of the GPS positioning system is limited, and when the robot performs a high-precision task, the GPS positioning system can only determine an approximate location of the robot, so it cannot be determined whether the location determined by the GPS positioning system is the accurate location of the robot; or a preset time has elapsed since last time the robot updates the location information, indicating that the update of the location information of the robot is delayed and the generated location information is inaccurate; or the robot does not have a positioning function and therefore cannot determine the pathfinding location of the robot), referring to FIG. 2, a first approach or a second approach may be adopted in this embodiment to enable the robot to move from the pathfinding location to the positioning wire. The first approach includes controlling the robot to move in a random or specified direction according to a preset policy until the robot moves onto the positioning wire, as shown by path 1 in FIG. 2. It can be understood that if the robot moves in a random direction, the robot will definitely move to the positioning wire because the positioning wire at least surrounds the working area of the robot. If the robot does not have a positioning function, controlling the robot to move to the positioning wire is the most convenient way to determine the location of the robot, and there is no need to acquire positioning information of the robot. If the approximate location of the robot can be acquired, at least the location on the positioning wire nearest to the approximate location of the robot can be learned. In this case, the robot is controlled to move toward the nearest location on the positioning wire, so that the time required for moving to the positioning wire can be greatly reduced.

The second approach includes detecting a signal transmitted on the positioning wire by a sensor arranged on the robot, and controlling the robot to move to the positioning wire according to a detection result of the sensor. The robot detects the positioning wire through the sensor. For example, as shown by path 2 in FIG. 2, the robot emits an electromagnetic wave and determines a distance between the robot and the surrounding positioning wire according to the intensity of magnetic induction; or uses a camera to photograph the surrounding environment to identify the nearest positioning wire. After the nearest positioning wire is detected, the robot is controlled to move to the positioning wire.

In one or more embodiments, the first approach and the second approach may be used in combination to control the robot to move to the positioning wire. For example, first, the robot is controlled to move in a random direction, and during movement, the robot senses the location of the surrounding positioning wire. If the positioning wire is detected, it means that the robot is very close to the positioning wire. In this case, the robot is then controlled to move toward the detected positioning wire until the robot moves to the positioning wire.

In a possible control method, to ensure the accuracy of the pathfinding path, the location of the robot on the positioning wire needs to be accurately determined, and based on the description of the positioning wire in the above embodiments, a signal providing device may be arranged on the positioning wire and/or a device on the positioning wire, so that after entering a sensing area of the positioning wire, the robot can identify the positioning wire and perform accurate positioning of the robot. The signal providing device may be an electric wire, a light emitter, a heater, an electronic tag, an agreed pattern, or the like. Correspondingly, the third sensor may be an electromagnetic sensor, a photoelectric sensor, a temperature sensor, a card reader, a camera, or the like.

An implementation of the present disclosure using a signal generator and a signal receiver will be described with reference to FIG. 3. Two ends of the positioning wire may be connected to the positioning base station. A signal generator and a signal receiver are respectively arranged at the positioning base station and the robot. The robot interacts with the positioning base station to obtain an accurate location of the robot on the positioning wire.

As shown in FIG. 3, in a scheme where the positioning wire is used as a signal line for signal transmission and the signal generator and the signal receiver are respectively arranged at the positioning base station and the robot, the signal generator respectively transmits a first signal s1 and a second signal s2 to the signal receiver along two directions of the wire. According to statuses of the first signal s1 and the second signal s2 received by the signal receiver, path lengths from the signal receiver to the signal generator in the two directions of the wire can be obtained respectively, so as to realize the accurate positioning of the robot on the positioning wire. FIG. 3 is a schematic diagram showing that the signal generator is arranged on the positioning base station and the signal receiver is arranged on the body of the robot. However, in practical applications, it is also feasible to arrange the signal generator on the body of the robot and arrange the signal receiver on the positioning base station. In this case, the positioning base station determines the location of the robot on the positioning wire according to the first signal s1 and the second signal s2, and then feeds back the location information to the robot through wireless communication.

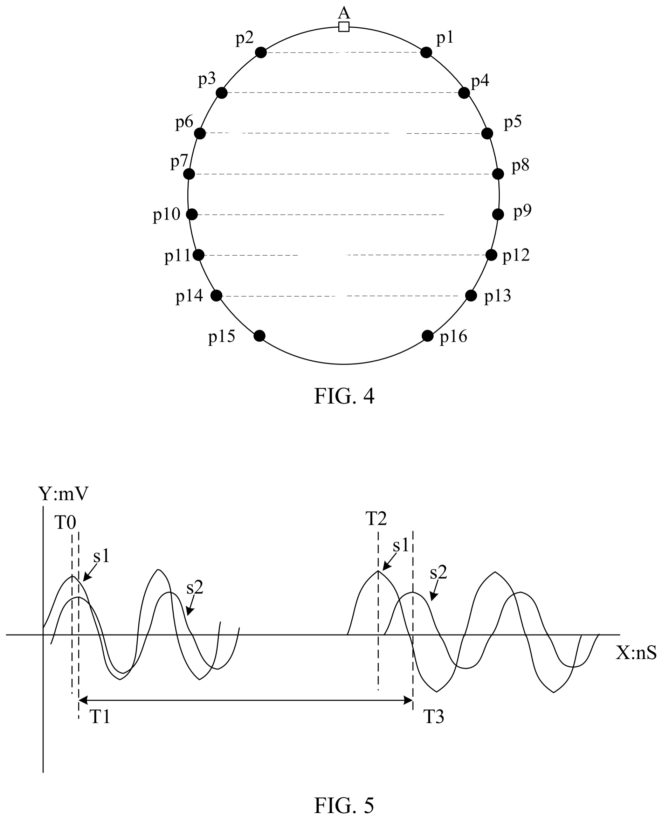

As shown in FIG. 4, it is assumed that A is the location of the charging station, and 16 path nodes p1 to p16 may be set on the wire. The robot may be controlled to perform mowing along a path of p16 → p15 → p14 → ... → p2 → p1 (or p1 → p2 → p3 → ... → p15 → p16). To be specific, after traveling along a straight line in the working area, the robot reaches a path node on the positioning wire, and after driving along the path node on the positioning wire to a next path node for steering adjustment and precise positioning, turns around and returns to the working area to continue working along the straight line, until the robot travels to a next path node on the positioning wire. In other words, the robot can obtain an accurate location thereof every time the robot reaches the positioning wire.

In an example where a signal generator and a signal receiver are respectively arranged on the robot and a positioning base station provided on the positioning wire, based on the above embodiments, acquiring a first location of the robot on the positioning wire in S104 of the robot control method provided by the embodiments of the present disclosure may include:

injecting a first positioning signal and a second positioning signal into the positioning wire, where the first positioning signal and the second positioning signal are transmitted in opposite directions along the positioning wire;

acquiring a time difference or a phase difference between the first positioning signal and the second positioning signal received by the robot, and calculating a distance between the robot and the specified location according to the time difference or the phase difference; and

determining the first location of the robot on the positioning wire according to the distance between the robot and the specified location.

In the above embodiments, the specified location may be the positioning base station arranged on the positioning wire or the signal generator arranged on the positioning wire, and the signal generator is communicatively connected to the positioning base station. The specific implementation of receiving the first positioning signal and the second positioning signal sent by the positioning base station is not limited in this embodiment.

In this embodiment, to determine a reference location point on the positioning wire, a sensing location point on the positioning wire which is distant from the charging base station by not greater than a preset distance may be determined first, the robot may be controlled to walk to the determined sensing location point, and a marking signal may be injected into the sensing location point, to mark the sensing location point where the marking signal is injected as the reference location point. Accordingly, when the robot walks on the positioning wire, the robot may determine whether the robot reaches the reference location point by determining whether the marking signal is detected.

Of course, the user may directly select a sensing location point on the positioning wire from a map in an APP as a reference location point, a distance between the selected reference location point and the charging base station is set as a preset distance, and preset pose data of the robot at the reference location point is determined. When the robot walks to the positioning wire and pose data of the robot is consistent with the preset pose data, it may be determined that the robot reaches the reference location point.

Specifically, the positioning base station may send out the first positioning signal and the second positioning signal at the same or different moments through the signal generator. After moving to the positioning wire, the robot receives the first positioning signal and the second positioning signal, respectively determines a moment at which the first positioning signal is received and a moment at which the second positioning signal is received, determines a transmission time of the first positioning signal according to the moment at which the first positioning signal is sent and the moment at which the first positioning signal is received, and determines a transmission time of the second positioning signal according to the moment at which the second positioning signal is sent and the moment at which the second positioning signal is received.

Thus, a difference between the transmission time of the first positioning signal and the transmission time of the second positioning signal can be determined, a distance between the robot on the positioning wire and the positioning base station can be calculated according to the difference and a length of the positioning wire, and the location of the robot on the positioning wire can be calculated according to the distance.

As shown in FIG. 5, for example, if the signal generator is arranged at the positioning base station and the signal receiver is arranged at the robot, the robot, when moving to the positioning wire, receives, at a moment T1, a first signal s1 transmitted by the positioning base station in a clockwise direction at a moment T0, and receives, at a moment T3, a second signal s2 transmitted by the positioning base station in a counterclockwise direction at a moment T2. Assuming that a length of the positioning wire from the robot to the positioning base station in the clockwise direction is defined as L2 and a length of the positioning wire from the robot to the positioning base station in the counterclockwise direction is defined as L1, the length of the positioning wire is calculated by the following formulas:

$$L1-L2=[T3-T1-(T2-T0)]\times V;$$

and

$$L1+L2=L,$$

where V represents a rate at which the first signal s1 and the second signal s2 are transmitted along the positioning wire, and L represents the total length of the positioning wire.

Thus, the accurate location of the robot on the positioning wire can be obtained by measuring T3/T1.

In the schemes shown in FIG. 3, FIG. 4, and FIG. 5, the signal generator is arranged at the positioning base station. However, the signal generator may be arranged at any location on the positioning wire, and is not limited to being arranged on the positioning base station.

It should be noted that in the above schemes, the positioning base station is mounted on the positioning wire or the signal generator arranged at any location on the positioning wire is connected to the positioning base station, and the specific mode of arrangement of the positioning wire is not limited, i.e., the positioning wire may be arranged around the working area, or arranged in the working area, or arranged around the destination location, which is not limited in the embodiments of the present disclosure. As the form of the positioning wire on which the positioning base station is arranged varies, the specific method of determining the location of the robot on the positioning wire needs to be adjusted accordingly. For example, referring to another feasible implementation in FIG. 4, if the robot moves to the positioning wire arranged in the working area, based on the above principle, the signal generator on the robot can still transmit signals along the two ends of the positioning wire. After the first signals s1 and s2 are respectively transmitted to the two ends, the positioning base station can only receive the signal s1. Then, the positioning base station calculates a distance between the positioning base station and the first location of the robot according to a rate at which the s1 signal is transmitted, and can still determine the first location of the robot on the positioning wire according to the distance between the positioning base station and the first location of the robot and the direction in which the positioning base station receives the signal.

In the above embodiments, if the destination location is a location on the positioning wire, a shortest path from the first location to the destination location along the positioning wire may be generated as the pathfinding path according to a relative position relationship between the first location and the destination location. If the base station is consistent with the destination location, the pathfinding path is directly acquired according to a phase difference and/or a time difference.

The embodiments of the present disclosure provide a plurality of schemes for accurately positioning a robot based on a positioning wire. In practical applications, the schemes for accurately positioning a robot based on a wire may be used alone or may be used in combination to enhance the accuracy of positioning, or other schemes for accurately positioning a robot based on a wire may also be adopted.

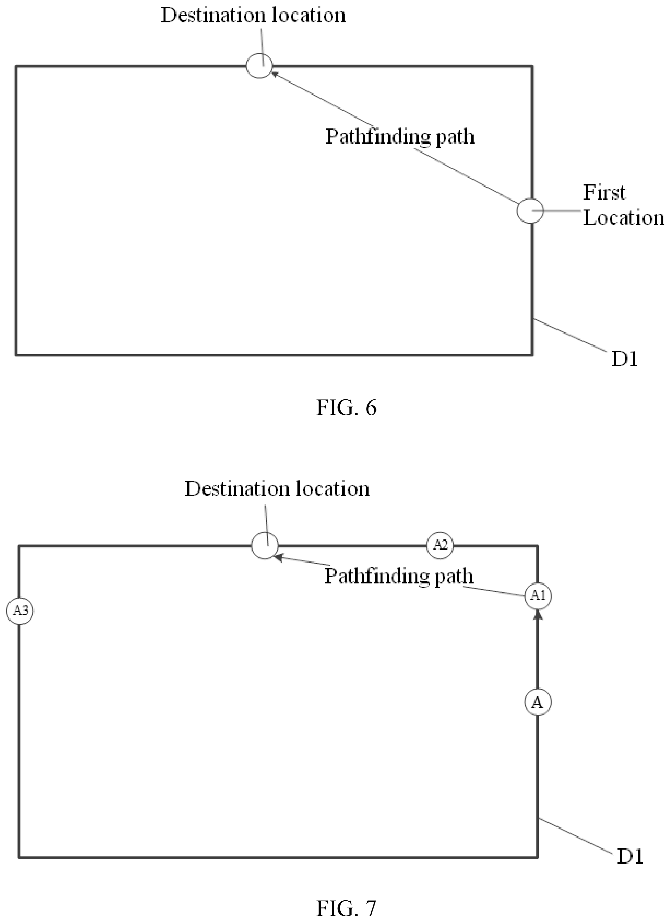

FIG. 6 is a schematic diagram of generating a first pathfinding path according to an embodiment of the present disclosure. Based on the above embodiments, the scheme of generating the pathfinding path from the first location to the destination location is further described in the embodiments of the present disclosure.

Referring to FIG. 6, the positioning wire includes a wire D1 surrounding the working area, and acquiring a first location of the robot on the positioning wire and generating a pathfinding path from the first location to a destination location in S104 may include:

after controlling the robot to reach the positioning wire D1, determining the first location based on the positioning wire D1; and

generating a straight path from the first location to the destination location as the pathfinding path.

In an implementation, a first wire D1 is arranged surrounding the working area, allowing the robot to perform positioning as required during working, thereby reducing the impact on the work. When the destination location is on the first wire D1, a straight path from the first location to the destination location is determined as the pathfinding path. This path is the shortest, and requires minimal time consumption.

FIG. 7 is a schematic diagram of generating a second pathfinding path according to an embodiment of the present disclosure. The positioning wire includes a wire D1 surrounding the working area. Preset reference locations are provided on the wire D1. For each reference location, it is necessary to determine in advance that a straight path from the reference location to the destination location is passable, i.e., there is no obstacle on the straight path from the reference location to the destination location. From another perspective, in the above embodiments, the destination location is certain, otherwise the preset reference locations on the wire D1 cannot be determined. Therefore, after the first location is determined, the above embodiments may adopt the following technical scheme:

determining a second location from a first reference location set, where the second location is a first reference location nearest to the first location on a side of the first location close to the destination location; and

generating the pathfinding path, where the pathfinding path includes a path from the first location to the second location along the positioning wire and a straight path from the second location to the charging station.

In an implementation, reference locations are preset on the first wire D1 arranged surrounding the working area. Referring to FIG. 7, a plurality of reference locations A1, A2, and A3 are provided on the first wire D1. When the robot is at the location A on the first wire D1, the robot first determines that the reference locations A1 and A2 are provided on a shortest path from the current location A to the destination location along the wire, and then selects the reference location A1 which is nearest to the current location A from the reference locations A1 and A2. After reaching the reference location A1 from the location A, the robot can directly move to the destination. This ensures that the robot will not be blocked when traveling along the pathfinding path generated by the robot. As such, in the process of generating a straight path directly to the destination location, the robot does not need to make adjustments according to an actual status of the path.

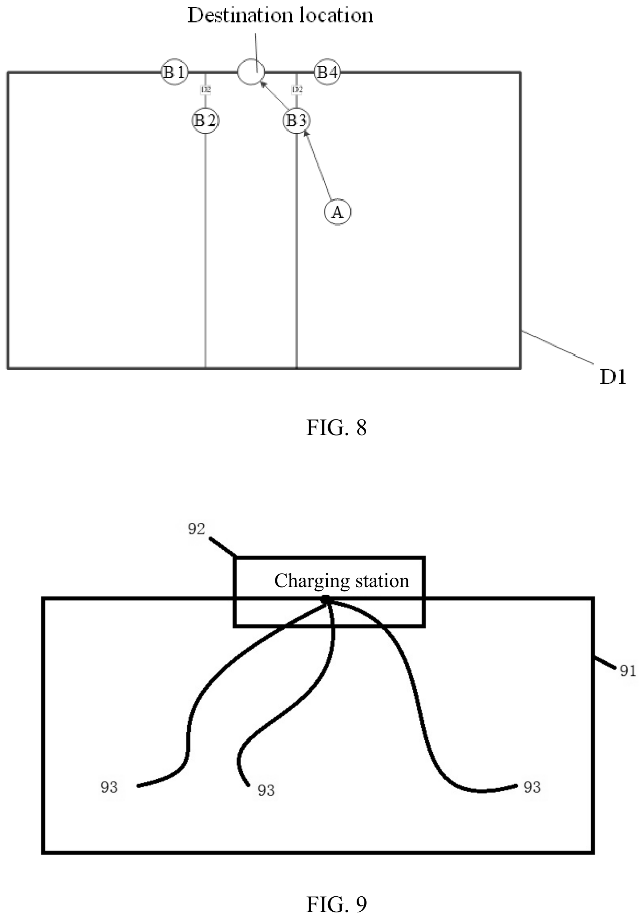

When the destination location is the location of the charging station, in another embodiment, referring to FIG. 8, the positioning wire may include a first wire D1 arranged around the working area of the robot and a second wire D2 for assisting in positioning. Therefore, in this embodiment, after the first location is determined, the pathfinding path may also be generated by the following method:

acquiring a third location from a second reference location set, where the second reference location set includes at least one second reference location, the second reference location is a location on the positioning wire which is distant from the charging station by less than a first threshold, and the third location is any one of the second reference locations; and

generating the pathfinding path, where the pathfinding path includes a straight path from the first location to the third location and a path from the third location to the charging station.

In this embodiment, the second reference location set includes reference locations B1, B2, B3, and B4. Straight-line distances between B1, B2, B3, and B4 and the charging station are the same. Generally, the third location is preferably the reference location B2 or B3 on the positioning wire D2. Of course, the reference location B1 or B4 on the first wire D1 may also be selected as the third location.

It should also be noted that it cannot be ensured that the robot will not encounter an obstacle or will not deviate in the process of moving along the straight path from the first location to the third location. Therefore, if the robot does not move according to the pathfinding path and the path execution fails, it is determined that the first preset condition is satisfied, and S102 is performed again to control the robot to move from the current location to the positioning wire.

Based on the above embodiments, in a preferred implementation, referring to FIG. 9, the positioning wire in this embodiment may include a first wire 91 arranged along an edge of the working area of the robot, a second wire 92 arranged around the charging station, and a third wire 93 at least partially overlapping a charging path of the charging station. The charging station may or may not be arranged on the first wire 91, the second wire 92 may partially overlap the first wire 91, and at least one end of the third wire 93 should be connected to a charging interface of the charging station, so that when the robot moves along the third wire 93, the robot can be directly correspondingly connected to the charging interface of the charging station when reaching the charging station, and the robot does not need to adjust its pose before charging. This avoids the problem of difficult alignment between a charging port of the robot and the charging interface of the charging station, and facilitates the charging of the robot.

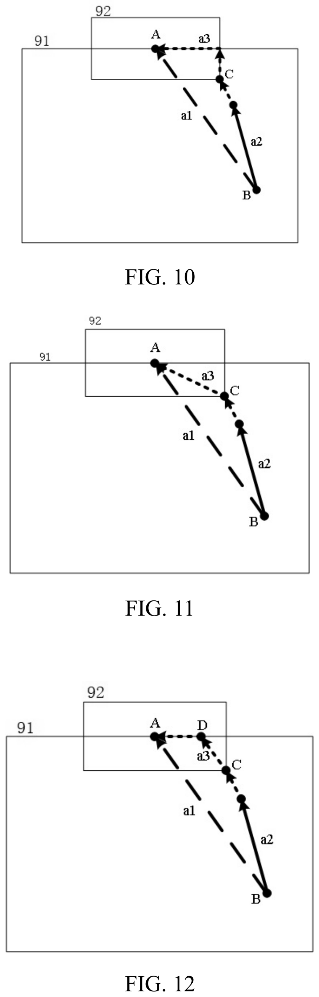

FIG. 10 is a schematic diagram of generating a third recharging path according to an embodiment of the present disclosure.

Based on the above embodiments, a scheme of controlling the robot to move to the charging station for recharging is further described in the embodiments of the present disclosure.

As shown in FIG. 10, in the robot control method provided by the embodiments of the present disclosure, the positioning wire may include a first wire 91 surrounding the working area and a second wire 92 surrounding the charging station, and the charging station is arranged on the first wire 91. The first wire 91 and the second wire 92 may employ different identification signals for distinguishing by the robot. The first wire 91 may run through a central axis of the charging station. The second wire 92 is arranged surrounding the charging station. A groove may be formed at a bottom of the charging station to place the second wire 92, to prevent the mounting of the first wire 91 from interfering with the mounting of the second wire 92.

Generating a pathfinding path from the first location to a destination location in S104 may include:

generating the pathfinding path when it is determined that the first location is located on the second wire, where the pathfinding path includes a path from the first location to an intersection point along the second wire and a path from the intersection point to the charging station,

where the intersection point is a specified intersection point of the second wire and the first wire, or the intersection point is a specified intersection point of the second wire and the third wire.

In an implementation, the first wire 91 is arranged surrounding the working area, allowing the robot to perform accurate positioning as required during mowing, thereby reducing the impact on the mowing. A charging station A is arranged on the first wire 91, and the second wire 92 is arranged surrounding the charging station A, so that the robot can better determine the location of the charging station based on the first wire 91 and the second wire 92 when approaching the charging station.

As shown in FIG. 10, it is assumed that the first recharging path is a1 and a path actually executed by the robot is a2. When it is determined at the end of the path a2 that the robot cannot execute the first recharging path, the robot is controlled to stop attempting to return to the first recharging path a1, and the robot is controlled to search for the wire. At this moment, the robot is close to the charging station, i.e., the robot is close to the second wire 92, so the robot is controlled to travel to the second wire 92, and a first precise location C is obtained on the wire. In this case, the robot may travel along the second wire 92 to the first wire 91, and then travel along the first wire 91 to the charging station A on the first wire 91. The path along which the robot travels from the first precise location C to the first wire 91 and then travels along the first wire 91 to the charging station A is determined as a second recharging path a3.

In the recharge control scheme for the robot according to the embodiments of the present disclosure, the first wire is arranged surrounding the working area, the second wire is arranged surrounding the charging station, and when the first recharging path cannot be executed, the robot is controlled to first travel to the second wire surrounding the charging station to determine a first precise location, travel along the second wire from the first precise location to the first wire, and then travel to the charging station on the first wire along the first wire. As such, the robot can smoothly move from the first precise location to the charging station, and is not likely to deviate from the path.

In another embodiment, FIG. 11 is a schematic diagram of generating a fourth recharging path according to an embodiment of the present disclosure.

Based on the above embodiments, a recharge control scheme for a target robot is further described in the embodiments of the present disclosure.

As shown in FIG. 11, in the robot control method provided by the embodiments of the present disclosure, the positioning wire may include a first wire 91 surrounding the working area and a second wire 92 surrounding the charging station, and the charging station is arranged on the first wire 91. The first wire 91 and the second wire 92 may employ different identification signals for distinguishing by the target robot. Specifically, the first wire 91 may run through a central axis of the charging station. The second wire 92 is arranged surrounding the charging station. A groove may be formed at a bottom of the charging station to place the second wire 92, to prevent the mounting of the first wire 91 from interfering with the mounting of the second wire 92.

Additionally, the method may further include step S103 (not shown): controlling the target robot to travel to a wire of the working area, determining a first accurate location of the target robot based on the wire, and generating a second recharging path from the first accurate location to the charging station, which may specifically include:

after controlling the target robot to reach the second wire 92, determining the first precise location based on the second wire 92; and

determining a straight path from the first precise location to the charging station as the second recharging path.

As shown in FIG. 6, it is assumed that the first recharging path is a1 and a path actually executed by the target robot is a2. When it is determined at the end of the path a2 that the target robot cannot execute the first recharging path a1, the target robot is controlled to stop attempting to return to the first recharging path a1, and the target robot is controlled to find the wire. At this moment, the target robot is close to the charging station A, i.e., the target robot is close to the second wire 92, so the target robot is controlled to travel to the second wire 92, and a first precise location C is obtained on the wire. Because the second wire 92 is arranged surrounding the charging station A, a straight path directly from the first precise location C to the charging station A may be planned as the second recharging path a3, allowing the robot to reach the charging station A in the shortest time.

In the recharge control scheme for the target robot according to the embodiments of the present disclosure, the first wire is arranged surrounding the working area, the second wire is arranged surrounding the charging station, and when the first recharging path cannot be executed, the target robot is controlled to first travel to the second wire surrounding the charging station to determine a first precise location, and directly travel along a straight line from the first precise location to the charging station. As such, the robot can reach the charging station in the shortest time, thereby avoiding as much as possible the problem that electric energy in the robot is used up in the process of moving to the charging station for charging.

In another embodiment, FIG. 12 is a schematic diagram of generating a fifth recharging path according to an embodiment of the present disclosure.

Based on the above embodiments, a recharge control scheme for a robot is further described in the embodiments of the present disclosure.

As shown in FIG. 12, in the robot control method provided by the embodiments of the present disclosure, the positioning wire may include a first wire 91 surrounding the working area and a second wire 92 surrounding the charging station, and the charging station is arranged on the first wire 91. The first wire 91 and the second wire 92 may employ different identification signals for distinguishing by the robot. Specifically, the first wire 91 may run through a central axis of the charging station. The second wire 92 is arranged surrounding the charging station. A groove may be formed at a bottom of the charging station to place the second wire 92, to prevent the mounting of the first wire 91 from interfering with the mounting of the second wire 92.

Generating a pathfinding path from the first location to a destination location in S104 may include:

after controlling the robot to reach the second wire 92, determining the first location based on the second wire 92; and

determining a straight path from the first location to the charging station as a target path.

As shown in FIG. 12, it is assumed that the first recharging path is a1 and a path actually executed by the robot is a2. When it is determined at the end of the path a2 that the robot cannot execute the first recharging path a1, the robot is controlled to stop attempting to return to the first recharging path a1, and the robot is controlled to find the wire. At this moment, the robot is close to the charging station A, i.e., the robot is close to the second wire 92, so the robot is controlled to travel to the second wire 92, and a first location C is obtained on the wire. Because the second wire 92 is arranged surrounding the charging station A, a straight path directly from the first location C to the charging station A may be planned as the second recharging path a3, allowing the robot to reach the charging station A in the shortest time.

In the recharge control scheme for the robot according to the embodiments of the present disclosure, the first wire is arranged surrounding the working area, the second wire is arranged surrounding the charging station, and when the first recharging path cannot be executed, the robot is controlled to first travel to the second wire surrounding the charging station to determine a first precise location, and directly travel along a straight line from the first precise location to the charging station. As such, the robot can reach the charging station in the shortest time, thereby avoiding as much as possible the problem that electric energy in the robot is used up in the process of moving to the charging station for charging.

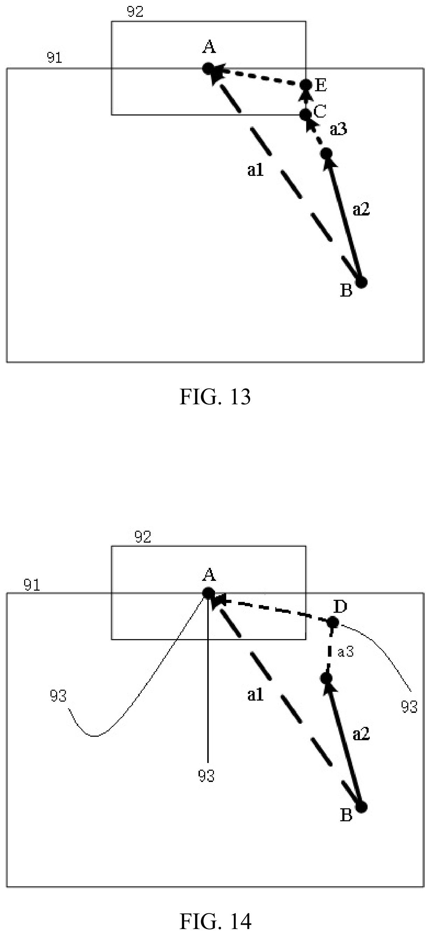

FIG. 13 is a schematic diagram of generating a sixth recharging path according to an embodiment of the present disclosure.

Based on the above embodiments, a recharge control scheme for a target robot is further described in the embodiments of the present disclosure.

As shown in FIG. 8, in the robot control method provided by the embodiments of the present disclosure, the positioning wire may include a first wire 91 surrounding the working area and a second wire 92 surrounding the charging station, and the charging station is arranged on the first wire 91. The first wire 91 and the second wire 92 may employ different identification signals for distinguishing by the target robot. The first wire 91 may run through a central axis of the charging station. The second wire 92 is arranged surrounding the charging station. A groove may be formed at a bottom of the charging station to place the second wire 92, to prevent the mounting of the first wire 91 from interfering with the mounting of the second wire 92.

Controlling the target robot to travel to a wire of the working area, determining a first accurate location of the target robot based on the wire, and generating a second recharging path from the first accurate location to the charging station in S103 may include:

after controlling the target robot to reach the second wire 92, determining the first precise location based on the second wire 92; and

determining a path from the first precise location along the second wire 92 to a second precise location and a straight path from the second precise location to the charging station as the second recharging path.

As shown in FIG. 8, it is assumed that the first recharging path is a1 and a path actually executed by the target robot is a2. When it is determined at the end of the path a2 that the target robot cannot execute the first recharging path a1, the target robot is controlled to stop attempting to return to the first recharging path a1, and the target robot is controlled to find the wire. At this moment, the target robot is close to the charging station A, i.e., the target robot is close to the second wire 92, so the target robot is controlled to travel to the second wire 92, and a first precise location C is obtained on the wire. To reduce damage to the lawn, prolong the service life of the target robot, and prevent the target robot from performing an action of turning by a large angle in situ, the target robot is controlled to travel from the first precise location C to a second precise location D on the second wire 92, and then travel along a straight line from the second precise location D to the charging station A. As such, the recharging path is shortened, and damage to the lawn and the target robot is avoided.

FIG. 14 is a schematic diagram of generating a seventh recharging path according to an embodiment of the present disclosure.

As shown in FIG. 14, in the robot control method provided by the embodiments of the present disclosure, the positioning wire may include a first wire 91 surrounding the working area and a third wire 93 at least partially overlapping the charging path of the charging station, and the charging station is arranged on the first wire 91. The first wire 91 and the third wire 93 may employ different identification signals for distinguishing by the robot. The first wire 91 may run through a central axis of the charging station. At least one end of the third wire 93 is arranged corresponding to a charging interface of the charging station. The third wire 93 may be arranged at the charging interface of the charging station, to prevent the mounting of the first wire 91 from interfering with the mounting of the third wire 93.

Generating a pathfinding path from the first location to a destination location in S104 may include: generating the pathfinding path from the first location to the charging station along the third wire when it is determined that the first location is located on the third wire.

As shown in FIG. 14, it is assumed that the first recharging path is a1 and a path actually executed by the robot is a2. When it is determined at the end of the path a2 that the robot cannot execute the first recharging path a1, the robot is controlled to stop attempting to return to the first recharging path a1, and the robot is controlled to find the wire. At this moment, the robot may be at any location in the working area, i.e., the robot may search for the nearest positioning wire, so when the nearest positioning wire is the third wire 93, the robot is controlled to travel to the third wire 93, and a first location D is obtained at the wire. Because at least one end of the third wire 93 is connected to a charging interface of the charging station A, a path directly from the first location D to the charging station A along the third wire 93 may be planned as the second recharging path a3, so that when the robot reaches the charging station A, a charging port of the robot is aligned with the charging interface, and the robot can be directly charged.

In the recharge control scheme for the robot according to the embodiments of the present disclosure, the first wire is arranged surrounding the working area, the third wire is arranged at least partially overlapping the charging path of the charging station, and when the first recharging path cannot be executed, the robot is controlled to first travel to the third wire overlapping the charging path of the charging station to determine a first location, and directly travel along the third wire from the first location to the charging station. As such, the robot can be directly charged without adjusting the pose of the robot when the robot reaches the charging station, and the problem that electric energy in the robot is used up in the process of moving to the charging station for charging can be avoided as much as possible.

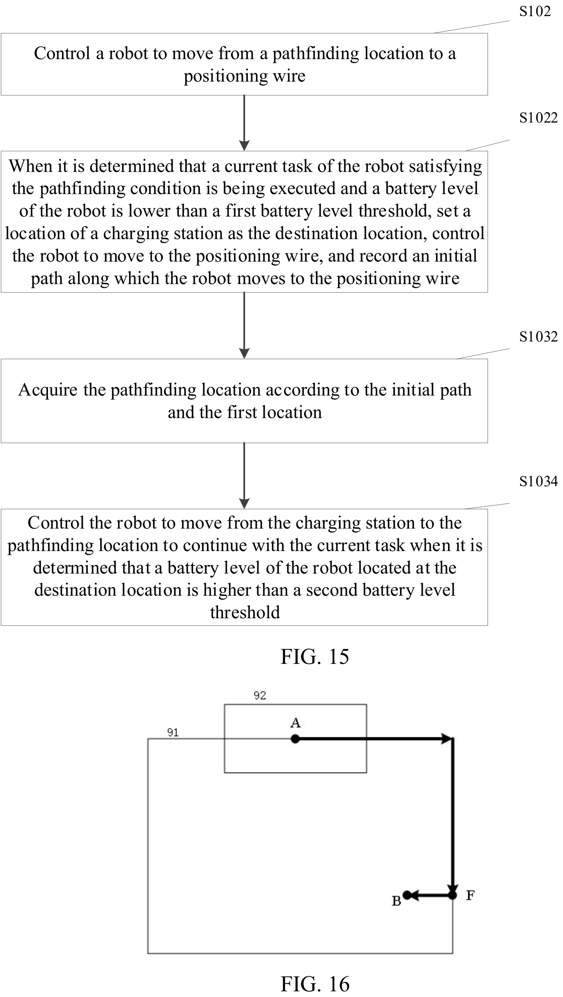

FIG. 15 is a flowchart of a method for determining a destination location of a robot according to an embodiment of the present disclosure.

Based on the above embodiments of the present disclosure, considering a status of actual operation of the robot, in the robot control method provided by the embodiments of the present disclosure, controlling a robot to move from a pathfinding location to a positioning wire in S102 includes a following step S1022.

At S1022, when it is determined that a current task of the robot satisfying the pathfinding condition is being executed and a battery level of the robot is lower than a first battery level threshold, a location of a charging station is set as the destination location, the robot is controlled to move to the positioning wire, and an initial path along which the robot moves to the positioning wire is recorded.

Correspondingly, the robot control method further includes the following steps S1032 and S1034.

At S1032, the pathfinding location is acquired according to the initial path and the first location.

At S1034, the robot is controlled to move from the charging station to the pathfinding location to continue with the current task when it is determined that a battery level of the robot located at the destination location is higher than a second battery level threshold.

In an implementation, in the recharge control scheme for the robot according to the embodiments of the present disclosure, the first wire is arranged surrounding the working area, the second wire is arranged surrounding the charging station, and when the first recharging path cannot be executed, the robot is controlled to first travel to the second wire surrounding the charging station to determine a first precise location, and in the process of planning a second recharging path from the first precise location to the charging station, monitor an execution status of the second recharging path. If determining that the second recharging path cannot be executed, the robot travels to the first wire for accurate positioning, and then travels along the first wire to the charging station on the first wire. As such, the recharging path for the robot has the advantages of short time and high reachability.

Based on the technical schemes in the above embodiments, FIG. 16 is a schematic diagram of a first work resumption path according to an embodiment of the present disclosure.

Based on the above embodiments, a scheme of resuming work by the robot after recharging is further described in the embodiments of the present disclosure.

As shown in FIG. 16, in the robot control method provided by the embodiments of the present disclosure, controlling the robot to move from the charging station to the pathfinding location to continue with the current task in S1034 may include:

controlling the robot to move to a fourth location along the positioning wire, where the fourth location is a location on the positioning wire nearest to the pathfinding location; and

controlling the robot to move from the fourth location to the pathfinding location.

As shown in FIG. 16, in an embodiment of the present disclosure, a pathfinding location B is used as a work resumption location. Because the charging of the robot has just been completed at this moment, the robot may directly travel along the wire to the pathfinding location. It should be noted that in FIG. 16, the wire includes a first wire and a second wire, and a charging station A is arranged on the first wire. However, FIG. 16 is merely an example, and the embodiments of the present disclosure may not be limited to such a wire deployment scheme and charging station deployment scheme.

In an implementation, after the charging of the robot is completed, the robot first searches for the nearest wire. If the robot is already on the wire, this step may be omitted. After the robot finds the wire, the robot senses a signal on the wire while driving along the wire. The destination location of the robot on the wire is a fourth location F on the wire nearest to the pathfinding location. The robot may call location information of the pathfinding location stored in advance, determine location information of the fourth location F according to the call location information of the pathfinding location and a precise location on the wire, and then travel back to the pathfinding location B after reaching the fourth location F.

According to the robot control scheme provided by the embodiments of the present disclosure, after the charging of the robot is completed, the robot is controlled to travel along the wire to the fourth location nearest to the pathfinding location, and then return to the pathfinding location from the fourth location to continue working. As such, it can be ensured that the robot accurately returns to the pathfinding location, thereby reducing the probability of some of the working area being left unoperated.

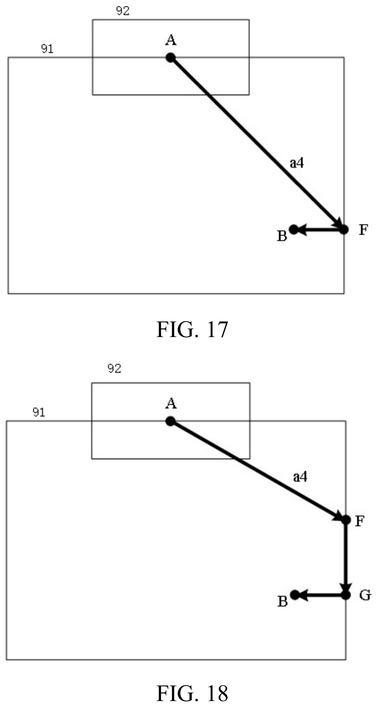

For example, FIG. 17 is a schematic diagram of generating a second work resumption path according to an embodiment of the present disclosure, and FIG. 18 is a schematic diagram of generating a third work resumption path according to an embodiment of the present disclosure.

Based on the above embodiments, a scheme of resuming work by the robot after recharging is further described in the embodiments of the present disclosure.

As shown in FIG. 17 and FIG. 18, in the robot control method provided by the embodiments of the present disclosure, controlling the robot to move from the charging station to the pathfinding location to continue with the current task in S1034 may include:

acquiring a fifth location from a first reference location set, where the first reference location set includes first reference locations on the positioning wire, from which the robot is able to move to the charging station along a straight line, and the fifth location is the first reference location nearest to the first location or is the first reference location nearest to the pathfinding location;

controlling the robot to move to the fifth location along a straight path from the charging station to the fifth location; and

controlling the robot to move from the fifth location to the pathfinding location.

Different from the previous embodiment, in the embodiment of the present disclosure, a first work resumption path a4 from the charging station A to a fifth location F on the wire is first planned in working area, and then the robot is controlled to travel from the fifth location F to the pathfinding location B. The fifth location F is determined according to the location information of the pathfinding location B, i.e., should be a location on the wire as close to the pathfinding location B as possible, and then a path is planned from the charging station A to the fifth location F to avoid a known obstacle and/or an area that has been mowed. Therefore, compared with the scheme of previous embodiment of the present disclosure, this scheme enables the robot to return to the breakpoint location faster, thereby saving more power.

However, if the robot travels to the pathfinding location immediately after reaching the fifth location F along the first work resumption path a4, the robot may need to turn by a large angle in situ, which is likely cause damage to the lawn and the robot. Therefore, based on the above scheme, in a preferred scheme, controlling the robot to return to the working area to continue working includes:

controlling the robot to move from the fifth location to a fourth location along the positioning wire, where the fourth location is a location on the positioning wire nearest to the pathfinding location; and

controlling the robot to move from the fourth location to the pathfinding location.

As shown in FIG. 18, the selected fifth location F may be a location near the point on the wire nearest to the pathfinding location, then a first work resumption path a4 from the charging station A to the fifth location F on the wire is planned in the working area, and then the robot is controlled to travel along the wire from the fifth location F to a sixth location G. The robot gradually adjusts an angle thereof in the process of traveling along the wire, until an angle suitable for returning to the pathfinding location is reached. It should be noted that the sixth location G does not necessarily be the location on the wire nearest to the pathfinding location, and a location on the wire at which the robot does not need to turn by a large angle may be determined as the sixth location G, i.e., the robot may return to the pathfinding location while turning. By this scheme, the robot can return to the breakpoint location faster, thereby saving time and power, and damage to the lawn and the robot caused by in-situ turning by a large angle is also avoided.

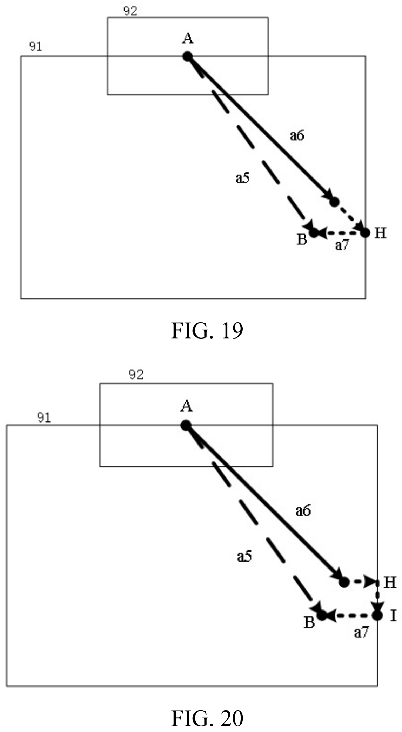

Based on the technical schemes in the above embodiments, FIG. 19 is a schematic diagram of generating a fourth work resumption path according to an embodiment of the present disclosure, and FIG. 20 is a schematic diagram of generating a fifth work resumption path according to an embodiment of the present disclosure.

Based on the above embodiments, a scheme of resuming work by the robot after recharging is further described in the embodiments of the present disclosure.

Different from the above embodiments, in the embodiment corresponding to FIG. 19, a second work resumption path a5 from the charging station A to the pathfinding location B is directly planned in the working area, the robot is controlled to return to the pathfinding location B along the second work resumption path a5, and the status of execution of the second work resumption path a5 by the robot is determined according to the location and pose of the robot during traveling of the robot. When the status of execution indicates that the robot is able to execute the second continuation path a5, a traveling state of the robot is maintained and the status of execution of the second continuation path a5 by the robot is continuously monitored.

When it is determined that the status of execution indicates that the robot is unable to execute the second work resumption path a5, for example, the robot actually travels along a path a6, the robot is controlled to travel to the wire for accurate positioning to obtain a location H of the robot, and a third work resumption path a7 to the breakpoint location is planned from the location H, until the pathfinding location B is reached. Compared with the work resumption schemes provided in the above embodiments, this scheme enables the robot to return to the breakpoint location faster, thereby saving more time and power.

As shown in FIG. 20, when it is determined that the execution status indicates that the robot is unable to execute the second work resumption path a5, the robot may be controlled to travel to a location H on the wire nearest to the breakpoint location, and then return to the pathfinding location B along the third work resumption path a7 from the location H.

To prevent the robot from turning in situ by a large angle to damage the lawn and the body of the robot, based on the above scheme, in a preferred scheme, a straight line from the location H to a location I and then from the location I to the pathfinding location B is determined as the third work resumption path a7.

As shown in FIG. 20, the selected location H may be a location near the point on the wire nearest to the pathfinding location. To prevent the robot from turning in situ by a large angle, when it is determined that the robot is unable to execute the second work resumption path a5, the robot is controlled to first travel to the location H on the wire, then travels along the wire from the location H to the location I, and then travels back to the pathfinding location B from the location I. In this process, the robot adjusts the angle thereof while traveling. As such, the robot can return to the breakpoint location faster, thereby saving time and power, and damage to the lawn and the robot caused by in-situ turning by a large angle is also avoided.

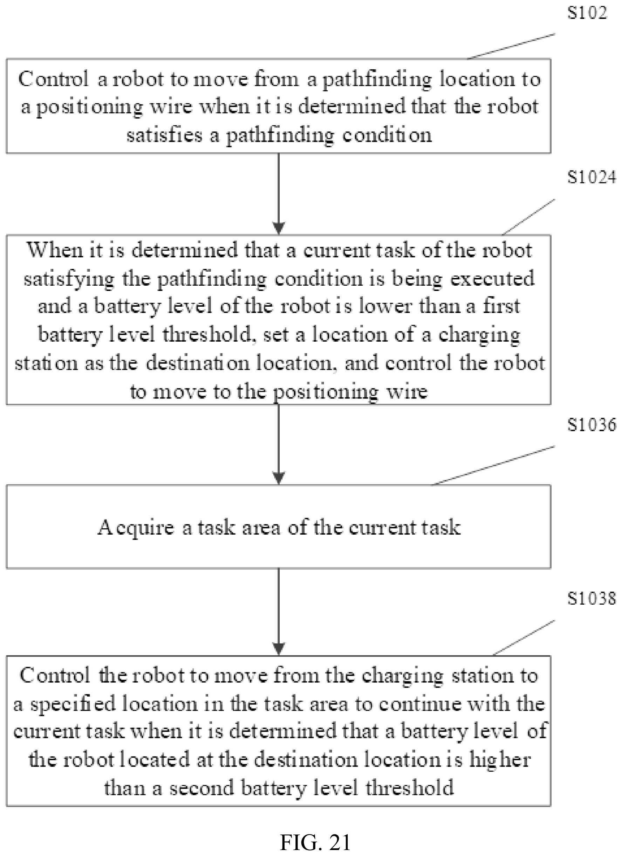

As shown in FIG. 21, in the robot control method provided by the embodiments of the present disclosure, controlling a robot to move from a pathfinding location to a positioning wire when it is determined that the robot satisfies a pathfinding condition in S102 may include a following step S1024.

At S1024, when it is determined that a current task of the robot satisfying the pathfinding condition is being executed and a battery level of the robot is lower than a first battery level threshold, a location of a charging station is set as the destination location, and the robot is controlled to move to the positioning wire.

Correspondingly, the robot control method further includes the following steps S1036 to S1038.

At S1036, a task area of the current task is acquired.

At S1038, the robot is controlled to move from the charging station to a specified location in the task area to continue with the current task when it is determined that a battery level of the robot located at the destination location is higher than a second battery level threshold.

The specified location in the task area includes a preset location located on the positioning wire within the task area, or a location on the positioning wire within the task area nearest to the charging station, or a location on the positioning wire within the task area nearest to the pathfinding location.

In one or more embodiments, controlling the robot to move from the charging station to the pathfinding location to continue with the current task when it is determined that the battery level of the robot located at the destination location is higher than a second battery level threshold in S1034 of the robot control method provided by the embodiments of the present disclosure may include:

when it is determined that the battery level of the robot located at the destination location is higher than the second battery level threshold,

determining the pathfinding location as the destination location, determining the pathfinding path as the preset path, controlling the robot to move along the pathfinding path, and executing the step of controlling the robot to move from the pathfinding location to the positioning wire when it is determined that the robot satisfies the pathfinding condition.

Based on the above embodiments, the robot determines the destination location as the pathfinding location after determining that the battery level is higher than the second battery level threshold. As such, when the battery level of the robot is sufficient, the robot can travel back to continue working after the location of the robot is determined through the positioning wire.

In one or more embodiments, controlling the robot to move to the destination location based on the pathfinding path includes:

determining the pathfinding path as the preset path, controlling the robot to move along the pathfinding path, and executing the step of controlling the robot to move from the pathfinding location to the positioning wire when it is determined that the robot satisfies the pathfinding condition.

Based on the above embodiments, schemes of returning to the pathfinding location to continue working by the robot after reaching the positioning wire are further described in the embodiments of the present disclosure, the destination location is the pathfinding location.

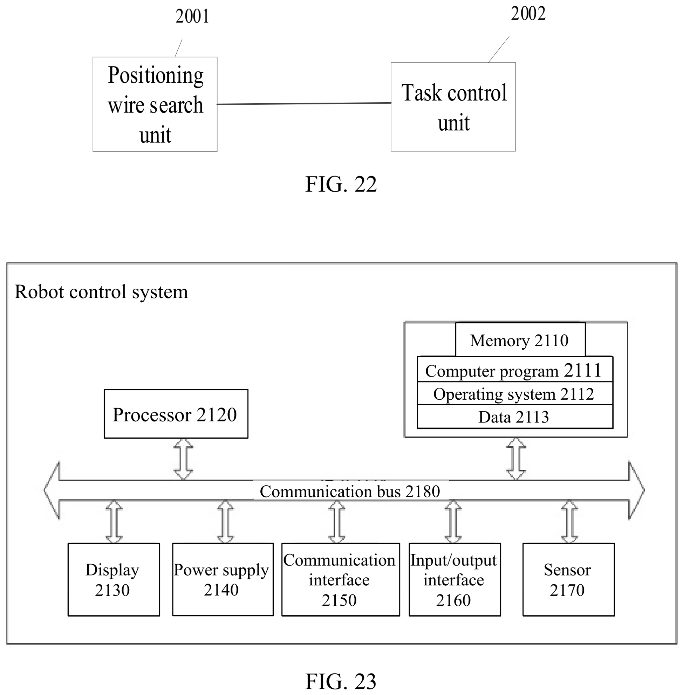

In accordance with another aspect of the present disclosure, FIG. 22 is a schematic structural diagram of a robot control apparatus according to the present disclosure. The apparatus includes:

a positioning wire search unit 2001 configured for: controlling a robot to move from a pathfinding location to a positioning wire when it is determined that the robot satisfies a pathfinding condition, where the pathfinding condition includes: the robot is unable to move along a preset path; location information of the robot is missing; or an instruction of controlling the robot not having a positioning function to move to a specified location is received; and

a task control unit 2002 configured for acquiring a first location of the robot on the positioning wire, generating a pathfinding path from the first location to a destination location, and controlling the robot to move to the destination location based on the pathfinding path.

FIG. 23 is a schematic structural diagram of a robot control system according to the present disclosure. The system includes:

a memory 2110, configured for storing a computer program 2111; and

a processor 2120, configured for executing the computer program 2111, where the computer program 2111, when executed by the processor 2120, causes the processor 2120 to implement the robot control method of any one of the above embodiments.

The processor 2120 may include one or more processing cores, and may be, for example, a 3-core processor or an 8-core processor. The processor 2120 may be implemented by at least one hardware form in a digital signal processing (DSP), a field-programmable gate array (FPGA), and a programmable logic array (PLA). The processor 2120 may also include a main processor and a co-processor. The main processor, or referred to as a central processing unit (CPU), is a processor for processing data in a wake-up state. The co-processor is a low power consumption processor configured for processing data in a standby state. In some embodiments, the processor 2120 may be integrated with a graphics processing unit (GPU). The GPU is configured for rendering and drawing content that needs to be displayed on a display. In some embodiments, the processor 2120 may further include an artificial intelligence (AI) processor. The AI processor is configured for processing a calculation operation related to machine learning.

The memory 2110 may include one or more computer-readable storage media that may be non-transitory. The memory 2110 may further include a high-speed random access memory and a non-transitory memory, for example, one or more magnetic disk storage devices or flash storage devices. In this embodiment, the memory 2110 is at least configured for storing the computer program 2111, where the computer program 2111, when loaded and executed by the processor 2120, can implement the related steps in the robot control method disclosed in any one of the above embodiments. In addition, resources stored in the memory 2110 may further include an operating system 2112, data 2113, etc., which may be stored temporarily or permanently. The operating system 2112 may be Windows. The data 2113 may include, but is not limited to, data involved in the method described above.

In some embodiments, the robot control system may further include a display 2130, a power supply 2140, a communication interface 2150, an input/output interface 2160, a sensor 2170, and a communication bus 2180.

It can be understood by those having ordinary skills in the art that the structure shown in FIG. 22 does not constitute a limitation on the robot control system, and the robot control system may include more components or fewer components than those shown in the figure.

It should be noted that the above apparatus and system embodiments are merely examples. For example, the division of the modules is merely logical function division and other division manners may be used in actual implementations. For example, a plurality of modules or components may be combined or integrated into another system, or some features may be ignored or not performed. In addition, the shown or discussed mutual couplings or direct couplings or communication connections may be implemented by using some interfaces. The indirect couplings or communication connections between the apparatuses or modules may be implemented in electronic, mechanical, or other forms. The modules described as separate components may or may not be physically separated, and the components shown as modules may or may not be physical modules, and may be located in one place or may be distributed over a plurality of network modules. Some or all of the modules may be selected according to actual needs to achieve the objectives of the scheme of this embodiment.

In addition, functional modules in embodiments of the present disclosure may be integrated into one processing module, or each of the modules may exist alone physically, or two or more modules may be integrated into one module. The integrated module may be implemented in a form of hardware, or may be implemented in a form of a software functional module.

The integrated module may be stored in a computer-readable storage medium if implemented in the form of a software functional module and sold or used as an independent product. Based on such an understanding, the technical schemes of the present disclosure essentially, or the part contributing to the related art, or all or some of the technical schemes may be implemented in the form of a software product. The software product is stored in a storage medium, to execute all or some of the steps of the methods described in the embodiments of the present disclosure.

The foregoing descriptions are merely optional embodiments of the present disclosure, and are not intended to limit the present disclosure. To those having ordinary skills in the art, various modifications and variations may be made to the present disclosure. Any modifications, equivalent replacements, and improvements made within the protection scope and principle of the present disclosure shall fall within the scope of the appended claims of the present disclosure.

**Claims**

1. A robot control method, comprising:

    controlling a robot to move from a pathfinding location to a positioning wire in response to determining that the robot satisfies a pathfinding condition, wherein the pathfinding condition comprises: the robot is unable to move along a preset path; location information of the robot is missing; or an instruction of controlling the robot not having a positioning function to move to a specified location is received, or a recharge instruction is received;
    acquiring a first location of the robot on the positioning wire, and generating a pathfinding path from the first location to a destination location; and
    controlling the robot to move to the destination location based on the pathfinding path.

2. The robot control method of claim 1, wherein the controlling a robot to move from a pathfinding location to a positioning wire comprises:
    controlling the robot to move in a random or specified direction according to a preset policy until the robot moves onto the positioning wire; or detecting a signal transmitted on the positioning wire by a sensor arranged on the robot, and controlling the robot to move to the positioning wire according to a detection result of the sensor.

3. The robot control method of claim 1 or 2, wherein the acquiring a first location of the robot on the positioning wire comprises:

    injecting a first positioning signal and a second positioning signal into the positioning wire, wherein the first positioning signal and the second positioning signal are transmitted in opposite directions along the positioning wire;
    acquiring a time difference or a phase difference between the first positioning signal and the second positioning signal received by the robot, and calculating a distance between the robot and the specified location according to the time difference or the phase difference; and
    determining the first location of the robot on the positioning wire according to the distance between the robot and the specified location.

4. The robot control method of claim 3, wherein the destination location is a location on the positioning wire, and the generating a pathfinding path from the first location to a destination location comprises: generating a shortest path from the first location to the destination location along the positioning wire as the pathfinding path according to a relative position relationship between the first location and the destination location.

5. The robot control method of any one of claims 1 to 3, wherein the generating a pathfinding path from the first location to a destination location comprises: generating a straight path from the first location to the destination location as the pathfinding path.

6. The robot control method of any one of claims 1 to 3, wherein the destination location is a location of a charging station, and the generating a pathfinding path from the first location to a destination location comprises:

    acquiring a second location from a first reference location set, wherein the first reference location set comprises first reference locations on the positioning wire, from which the robot is able to move to the charging station along a straight line, and the second location is the first reference location nearest to the first location on a side of the first location close to the charging station; and
    generating the pathfinding path, wherein the pathfinding path comprises a path from the first location to the second location along the positioning wire and a straight path from the second location to the charging station.

7. The robot control method of any one of claims 1 to 3, wherein the destination location is a location of a charging station, and the generating a pathfinding path from the first location to a destination location comprises:

acquiring a third location from a second reference location set, wherein the second reference location set comprises at least one second reference location, the second reference location is a location on the positioning wire which is distant from the charging station by less than a first threshold, and the third location is any one of the first reference locations; and
generating the pathfinding path, wherein the pathfinding path comprises a straight path from the first location to the third location and a path from the third location to the charging station.

8. The robot control method of any one of claims 1 to 7, wherein the positioning wire comprises at least one of:

a first wire arranged along an edge of a working area of the robot;
a second wire arranged surrounding the charging station; and
a third wire at least partially overlapping a charging path of the charging station.

9. The robot control method of claim 8, wherein the destination location is a location of a charging station, and the generating a pathfinding path from the first location to a destination location comprises:

generating the pathfinding path in response to determining that the first location is located on the second wire, wherein the pathfinding path comprises a path from the first location to an intersection point along the second wire and a path from the intersection point to the charging station,
wherein the intersection point is a specified intersection point of the second wire and the first wire, or the intersection point is a specified intersection point of the second wire and the third wire.

10. The robot control method of claim 8, wherein the destination location is a location of a charging station, and the generating a pathfinding path from the first location to a destination location comprises:
generating a straight path from the first location to the charging station as the pathfinding path in response to determining that the first location is located on the second wire.

11. The robot control method of claim 8, wherein the generating a pathfinding path from the first location to a destination location comprises:
generating the pathfinding path from the first location to the charging station along the third wire in response to determining that the first location is located on the third wire.

12. The robot control method of claim 3 or 4, wherein the controlling a robot to move from a pathfinding location to a positioning wire in response to determining that the robot satisfies a pathfinding condition comprises:

in response to determining that a current task of the robot satisfying the pathfinding condition is being executed and a battery level of the robot is lower than a first battery level threshold, setting a location of a charging station as the destination location, controlling the robot to move to the positioning wire, and recording an initial path along which the robot moves to the positioning wire; and
correspondingly, the robot control method further comprises:

acquiring the pathfinding location according to the initial path and the first location; and controlling the robot to move from the charging station to the pathfinding location to continue with the current task in response to determining that the battery level of the robot located at the destination location is higher than a second battery level threshold.

13. The robot control method of claim 12, wherein the controlling the robot to move from the charging station to the pathfinding location to continue with the current task comprises:

controlling the robot to move to a fourth location along the positioning wire, wherein the fourth location is a location on the positioning wire nearest to the pathfinding location; and
controlling the robot to move from the fourth location to the pathfinding location.

14. The robot control method of claim 12, wherein the controlling the robot to move from the charging station to the pathfinding location to continue with the current task comprises:

acquiring a fifth location from a first reference location set, wherein the first reference location set comprises first reference locations on the positioning wire, from which the robot is able to move to the charging station along a straight line, and the fifth location is the first reference location nearest to the first location or is the first reference location nearest to the pathfinding location;

controlling the robot to move to the fifth location along a straight path from the charging station to the fifth location; and

controlling the robot to move from the fifth location to the pathfinding location.

15. The robot control method of claim 14, wherein the controlling the robot to move from the fifth location to the pathfinding location comprises:

controlling the robot to move from the fifth location to a fourth location along the positioning wire, wherein the fourth location is a location on the positioning wire nearest to the pathfinding location; and

controlling the robot to move from the fourth location to the pathfinding location.

16. The robot control method of claim 12, wherein the controlling the robot to move from the charging station to the pathfinding location to continue with the current task in response to determining that the battery level of the robot located at the destination location is higher than a second battery level threshold comprises:

in response to determining that the battery level of the robot located at the destination location is higher than the second battery level threshold:

determining the pathfinding location as the destination location, determining the pathfinding path as the preset path, controlling the robot to move along the pathfinding path, and executing the step of controlling the robot to move from the pathfinding location to the positioning wire in response to determining that the robot satisfies the pathfinding condition.

17. The robot control method of any one of claims 1 to 11, wherein the controlling a robot to move from a pathfinding location to a positioning wire in response to determining that the robot satisfies a pathfinding condition comprises:

in response to determining that a current task of the robot satisfying the pathfinding condition is being executed and a battery level of the robot is lower than a first battery level threshold, setting a location of a charging station as the destination location, and controlling the robot to move to the positioning wire; and

correspondingly, the robot control method further comprises:

acquiring a task area of the current task; and controlling the robot to move from the charging station to a specified location in the task area to continue with the current task in response to determining that the battery level of the robot located at the destination location is higher than a second battery level threshold.

18. The robot control method of claim 17, wherein the specified location in the task area comprises a preset location on the positioning wire within the task area.

19. The robot control method of claim 18, wherein the specified location in the task area is a location on the positioning wire within the task area which is nearest to the charging station.

20. The robot control method of claim 18, wherein the specified location in the task area is a location on the positioning wire within the task area which is nearest to the pathfinding location.

21. The robot control method of any one of claims 1 to 11, wherein the controlling a robot to move from a pathfinding location to a positioning wire in response to determining that the robot satisfies a pathfinding condition comprises:

in response to determining that the robot is executing a task and location information of the robot is missing, controlling the robot to move from the pathfinding location to the positioning wire, and recording motion information of the robot moving from the pathfinding location to the positioning wire through an inertial measurement unit arranged on the robot;

acquiring coordinates of the pathfinding location according to the motion information, and determining whether the pathfinding location is located within a task area of the robot;

in response to determining that the pathfinding location is located within the task area of the robot, setting the pathfinding location as the destination location; and

in response to determining that the pathfinding location is located outside the task area of the robot, setting a specified location within the task area as the destination location.

22. The robot control method of any one of claims 1 to 21, wherein the controlling the robot to move to the destination location based on the pathfinding path comprises:

determining the pathfinding path as the preset path, controlling the robot to move along the pathfinding path, and executing the step of controlling the robot to move from the pathfinding location to the positioning wire in response to determining that the robot satisfies the pathfinding condition.

**23.** A robot control apparatus, comprising:

a positioning wire search unit configured for controlling a robot to move from a pathfinding location to a positioning wire in response to determining that the robot satisfies a pathfinding condition, wherein the pathfinding condition comprises: the robot is unable to move along a preset path; location information of the robot is missing; or an instruction of controlling the robot not having a positioning function to move to a specified location is received; and
a task control unit configured for acquiring a first location of the robot on the positioning wire, generating a pathfinding path from the first location to a destination location, and controlling the robot to move to the destination location based on the pathfinding path.

**24.** A robot, comprising:

a memory, configured for storing a computer program; and
a processor, configured for executing the computer program, wherein the computer program, when executed by the processor, causes the processor to perform the robot control method of any one of claims 1 to 22.

| Control a robot to move to a positioning wire when it is determined that the robot satisfies a first preset condition | S102 |

| Acquire a first location of the robot on the positioning wire, generate a pathfinding path from the first location to a destination location | S104 |

| Control the robot to move to the destination location based on the pathfinding path | S106 |

FIG. 1

FIG. 2

FIG. 3

FIG. 4

FIG. 5

FIG. 6

FIG. 7

Destination location

FIG. 8

FIG. 9

FIG. 10

FIG. 11

FIG. 12

FIG. 13

FIG. 14

S102

Control a robot to move from a pathfinding location to a positioning wire

S1022

When it is determined that a current task of the robot satisfying the pathfinding condition is being executed and a battery level of the robot is lower than a first battery level threshold, set a location of a charging station as the destination location, control the robot to move to the positioning wire, and record an initial path along which the robot moves to the positioning wire

S1032

Acquire the pathfinding location according to the initial path and the first location

S1034

Control the robot to move from the charging station to the pathfinding location to continue with the current task when it is determined that a battery level of the robot located at the destination location is higher than a second battery level threshold

FIG. 15

FIG. 16

FIG. 17

FIG. 18

FIG. 19

FIG. 20

S102

Control a robot to move from a pathfinding location to a positioning wire when it is determined that the robot satisfies a pathfinding condition

S1024

When it is determined that a current task of the robot satisfying the pathfinding condition is being executed and a battery level of the robot is lower than a first battery level threshold, set a location of a charging station as the destination location, and control the robot to move to the positioning wire

S1036

Acquire a task area of the current task

S1038

Control the robot to move from the charging station to a specified location in the task area to continue with the current task when it is determined that a battery level of the robot located at the destination location is higher than a second battery level threshold

FIG. 21

2001                                    2002

| Positioning wire search unit | — | Task control unit |

FIG. 22

Robot control system

Memory 2110

| Computer program 2111 |
| Operating system 2112 |
| Data 2113 |

Processor 2120

Communication bus 2180

| Display 2130 | Power supply 2140 | Communication interface 2150 | Input/output interface 2160 | Sensor 2170 |

FIG. 23

## INTERNATIONAL SEARCH REPORT

| International application No. |
| --- |
| **PCT/CN2023/122116** |

**A. CLASSIFICATION OF SUBJECT MATTER**

G05D1/00(2024.01)i

According to International Patent Classification (IPC) or to both national classification and IPC

**B. FIELDS SEARCHED**

Minimum documentation searched (classification system followed by classification symbols)

IPC:G05D

Documentation searched other than minimum documentation to the extent that such documents are included in the fields searched

Electronic data base consulted during the international search (name of data base and, where practicable, search terms used)

CNABS, CNTXT, CNKI, VEN: 充电, 磁导线, 导航, 导线, 导引线, 点, 电线, 定位, 定位导线, 丢失, 断点, 割草, 机器人, 路径, 路线, 目的, 位置, 寻路, 中转, cable, magnetic wire, wireway, guide, loss, breakpoint, route, position, location

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116414124 A (SHENZHEN LEDONG ROBOT CO., LTD.) 11 July 2023 (2023-07-11) claims 1-10 and entire description | 1-24 |
| PX | CN 116360432 A (SHENZHEN LEDONG ROBOT CO., LTD.) 30 June 2023 (2023-06-30) claims 1-18 and entire description | 1-24 |
| X | CN 109426251 A (HANGZHOU HIKROBOT TECHNOLOGY CO., LTD.) 05 March 2019 (2019-03-05) description, paragraphs 0051-0108 | 1-24 |
| A | CN 114610038 A (CHONGQING UNIVERSITY OF TECHNOLOGY) 10 June 2022 (2022-06-10) entire description | 1-24 |
| A | CN 115605818 A (GLOBE (JIANGSU) CO., LTD.) 13 January 2023 (2023-01-13) entire description | 1-24 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 December 2023** | **24 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/122116**

| Patent document cited in search report | | | Publication date (day/month/year) | Patent family member(s) | | | Publication date (day/month/year) |
|---|---|---|---|---|---|---|---|
| CN | 116414124 | A | 11 July 2023 | None | | | |
| CN | 116360432 | A | 30 June 2023 | None | | | |
| CN | 109426251 | A | 05 March 2019 | WO | 2019042018 | A1 | 07 March 2019 |
| CN | 114610038 | A | 10 June 2022 | None | | | |
| CN | 115605818 | A | 13 January 2023 | None | | | |

Form PCT/ISA/210 (patent family annex) (July 2022)

## EP 4 675 385 A1

**Patent documents cited in the description**

- CN 2023101989477
- CN 2023102487213